Europäisches Patentamt

European Patent Office

Office européen des brevets

(19)

(11) EP 0 378 816 B1

(12) **EUROPEAN PATENT SPECIFICATION**

(45) Date of publication and mention
of the grant of the patent:
**03.09.1997 Bulletin 1997/36**

(51) Int Cl.6: **G06F 9/38**

(21) Application number: **89123183.9**

(22) Date of filing: **14.12.1989**

(54) **Production line method and apparatus for instruction execution**

Verfahren und Vorrichtung für Pipeline-Befehlsausführung

Méthode et dispositif d'exécution d'instructions en pipeline

(84) Designated Contracting States:
**DE FR GB IT**

(30) Priority: **19.12.1988 US 286580**

(43) Date of publication of application:
**25.07.1990 Bulletin 1990/30**

(73) Proprietor: **Bull HN Information Systems Inc.**
**Billerica, MA 01821-4186 (US)**

(72) Inventors:
• **Miu, Ming-Tzer**
**Chelmsford, MA 01824 (US)**

• **Joyce, Thomas F.**
**Westford, MA 01886 (US)**

(74) Representative:
**Dost, Wolfgang, Dr.rer.nat., Dipl.-Chem. et al**
**Patent- und Rechtsanwälte**
**Bardehle . Pagenberg . Dost . Altenburg .**
**Frohwitter . Geissler & Partner**
**Postfach 86 06 20**
**81633 München (DE)**

(56) References cited:
**EP-A- 0 198 214          EP-A- 0 236 745**
**US-A- 4 598 365**

**Description**

FIELD OF USE

This invention relates to data processing systems and more particularly to a system which executes instructions in a pipeline fashion

DESCRIPTION OF THE PRIOR ART

It is well known that data processing systems include a memory for storing instructions and operands, and a processing unit for executing the instructions. The processing unit fetches the instructions from memory, generates an operand address and fetches the operand or operands from memory. The processing unit then executes the instruction and stores the resulting operand or operands back into memory at a specified location. The processing unit then fetches the next instruction.

Serial operation, particularly the need to access memory, often was a limitation on system throughput. Accordingly, caches were added to the system to improve performance. Initially, the cache stored both instructions and operands, but later designs included an instruction cache and a data cache.

About the same time, the data processing designs were implemented in a pipeline operation. Whereas, heretofor instructions were executed serially, that is the next instruction was fetched only after the execution of the previous instruction was completed, in new designs the instruction execution was pipelined. In the pipeline operation, the system is organized into number of stages, such as an instruction stage in which the instruction is fetched and analyzed, an address stage in which the operand address is developed, a memory or cache stage in which the operand is fetched, and an execution stage in which the instruction is completed. The instructions are placed serially into the pipeline. As soon as the instruction operation is completed in the instruction stage, the instruction is passed on to the address stage and the next instruction to be executed is fetched. Therefore, in the four stage system described, different portions of four instructions could be executed at the same time.

The throughput of the above kind of pipeline operation however, is limited, since the execution of each instruction requires that it pass through each stage of the pipeline. In order to improve the performance, certain systems overlap the operations being executed by certain stages of the pipeline where possible.

An example of a pipelined signal processor is the system described in the European patent application EP-A-0198214 entitled "Branch control in a three phase pipelined signal processor". In this system, a three phase pipelined operation for instructions exists consisting of fetch, decode, and execute operations. To provide additional flexibility and reduce branch latency, all of the instructions executed except for branch instructions are executed on phase three. Branch instructions are caused to execute at the end of phase two. Indirect branching is accomodated by making available the contents of a common data bus to be placed in the instruction address register that would be branched to. The contents of the data bus depend upon the instruction which executes simultaneously with the branch instruction, i.e., that which is in the third phase in the pipeline. Interrupt protection is therefore required for these types of branching actions.

Another example of a pipeline machine is the system described in U.S. Patent No. 4,760,519 entitled "Data Processing Apparatus and Method Employing Collision Detection and Prediction." This system includes two independent pipelines, a three stage instruction pipeline and a three stage execution pipeline. The last stage of the instruction pipeline is connected to overlap the first stage of the execution pipeline. In this type of system, an instruction still requires a minimum of five cycle times for completion.

Accordingly, it is a primary object of the present invention to provide a high performance pipeline system.

It is another object of the present invention to provide a system which completes to the extent possible the execution of instructions utilizing a minimum number of pipeline stages.

The above objects are achieved in a pipelined data processing apparatus for instruction execution according to the characteristic features of claim 1 and in a production line method according to the characteristic features of claim 10. Further embodiments are defined in the subclaims.

SUMMARY OF THE INVENTION

In a preferred embodiment of a data processing system the instruction execution apparatus is organized as a production line system and includes a number of pipeline processors each one performing a different operation on each instruction going down the production pipeline. Certain types of instructions are executed by earlier pipeline processors and dropped out of the production line. This frees up the earlier pipeline processors to execute subsequent instructions. Other types of instructions are executed at the end of the production line. This improves the overall throughput of the data processing system.

More particularly, during a first cycle, a a first pipeline processor (instruction I unit) fetches the instruction from memory. During a second cycle the I unit decodes the instruction and executes certain branch instructions. A second pipeline processor (address A unit) receives the instruction from the I unit. During a third cycle the A unit either generates an address specifying the location of an operand in memory needed to complete the execution of a "memory" instruction during a subsequent cycle or executes a "register-to-register" instruction. The operand is fetched from memory during a fourth cycle for the "memory" instruction which is executed by a further (third) pipeline processor (execution E unit) of the series of pipeline processors along the production line. During a fifth cycle the "memory" instruction is removed from the production line. The branch instructions having been executed during the second cycle of operation and the "register-to-register" instructions having been executed during the third cycle of operation are effectively dropped or removed from the production line and therefore require no further cycles in the production line, thereby improving the system throughput.

## BRIEF DESCRIPTION OF THE DRAWINGS

Figure 1 is a block diagram of the overall system which includes the apparatus of the present invention.

Figure 2 is a more detailed block diagram of the overall system of Figure 1.

Figure 3 is a logic block diagram of major elements of the production pipeline cycles.

Figure 4 shows the locations in the I cache of the instructions which demonstrate the invention.

Figure 5 shows a sequence of the instructions being processed during the production pipeline cycles.

Figure 6A shows a block diagram of the flow of the firmware which controls the logic elements in the address unit which generate a memory address of an operand used to execute an instruction in the execution unit.

Figure 6B shows a block diagram of the flow of the firmware which controls the logic elements which complete the execution of the instruction in the execution unit.

Figure 7 shows a block diagram of the firmware which controls the logic to execute a software visible register instruction.

## DESCRIPTION OF THE PREFERRED EMBODIMENT

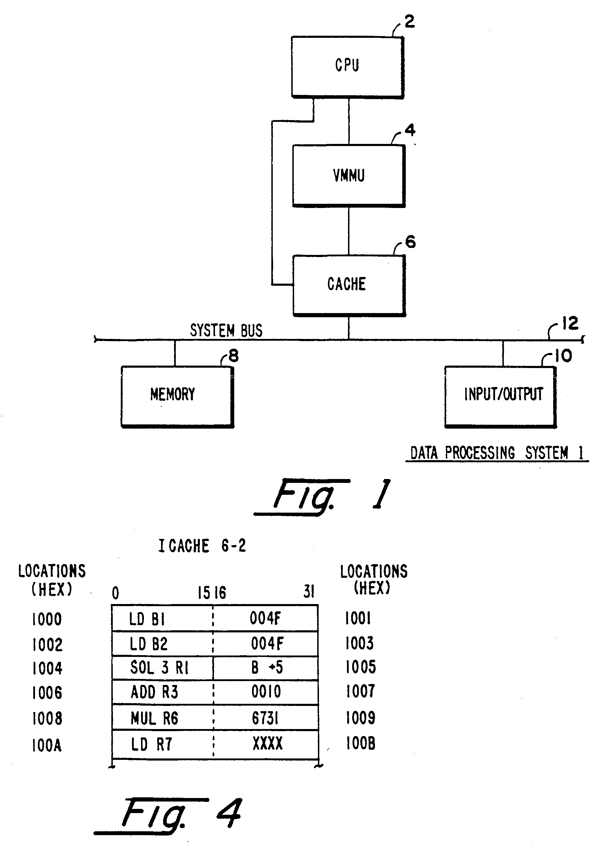

Figure 1 shows a block diagram of a production pipeline data processing system 1. Included are a central processing unit (CPU) 2, a virtual memory management unit (VMMU) 4, a cache unit 6, a memory subsystem 8, and input/output peripheral unit 10. The cache unit 6, memory unit 8, and input/output peripheral unit 10 are all coupled in common to a system bus 12. The memory 8 stores instructions and operands. Those operands and instructions, having the highest probability of being executed immediately, are transferred to cache unit 6 from the memory subsystem 8.

The CPU 2 receives instructions from the cache unit 6 and in the execution of these instructions sends the virtual address portion of the instruction to VMMU 4. The VMMU 4 translates the virtual address into a physical address which is applied to cache unit 6 for fetching the necessary operands to allow the CPU 2 to execute the instructions.

The input/output unit 10 represents typically any number of peripheral controllers with their devices, or an input/output processor which controls peripheral controllers and devices, or the unit 10 may represent a communications subsystem.

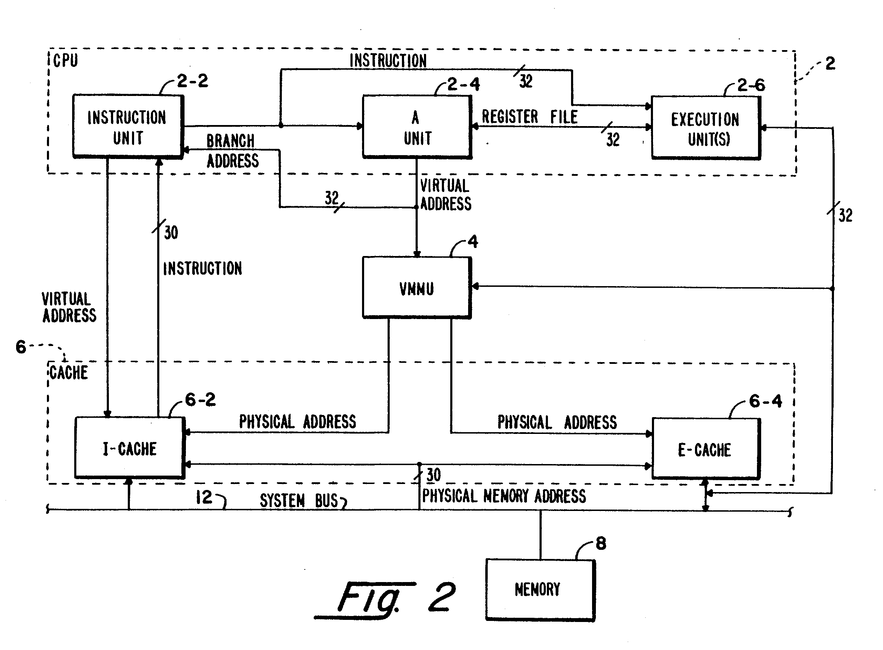

Figure 2 shows in block diagram form the major elements that make up the CPU 2 and the cache unit 6. The CPU 2 includes an instruction (I) unit 2-2, an A unit 2-4, and a number of execution (E) units 2-6. The execution units 2-6 could be a scientific instruction processor or a commercial instruction processor. However, for simplicity of description, only the operation of one of the execution units 2-6 is described which is sufficient to understand the invention.

The cache unit 6 includes an I-cache 6-2 and an E-cache 6-4. The I-cache 6-2 stores the instructions that are to be executed and the E-cache 6-4 stores the operands upon which the instructions operate. The I-unit 2-2 performs essentially two functions. It prefetches instructions from I-cache 6-2 and then cracks those instructions to determine how the other units, namely the A unit 2-4 and the E unit 2-6, will further process the instruction. In addition the I-unit 2-2 executes certain branch instructions which are then removed from the production line.

The A unit 2-4 receives the instruction from the I-unit 2-2 and executes the instruction if it is a register-to-register instruction. When the instruction is to be executed by the E unit 2-6, the A unit 2-4 sends a virtual address to the VMMU 4 which translates it into a physical address for the E-cache unit 6-4. E-cache 6-4 sends the operands to the E unit 2-6 for the completion of the execution of the instruction originally received by the instruction unit 2-2 from the I-cache unit 6-2.

The A unit 2-4 will also confirm the execution of a branch instruction and send the branch address back to the instruction unit 2-2 which has already requested the next instruction at the location in I-cache 6-2 specified by the I unit 2-2 pre-fetch branch address. Both the A unit 2-4 and the E unit 2-6 include register files which store the contents of the registers which are accessible to the programmers, that is, so called software visible registers. Both the I-cache 6-2 and the E-cache 6-4 are coupled to system bus 12 and their contents are updated with instructions and operands received from memory 8.

Instructions are executed in a production pipeline fashion by the elements of CPU 2. That is, the I unit 2-2 receives an instruction from I-cache 6-2, cracks it, and then sends the instruction to the A unit 2-4. The A unit 2-4 either executes the instruction or sends the virtual address to the VMMU 4 for translation in order to address the E-cache 6-4. E-cache 6-4 sends the designated operands to the E unit 2-6.

While the A unit 2-4 is executing its portion of the first instruction from the I unit 2-2, the I unit 2-2 is fetching the second instruction and subsequent instructions from I-cache 6-2. When the A unit 2-4 sends the virtual address specified by the first instruction to the VMMU 4 and notifies the I unit 2-2 of that event, the I unit 2-2 sends the second instruction to the A unit 2-4. The VMMU 4 addresses the E-cache 6-4 while the A unit 2-4 is processing the second instruction in the pipeline. When the E unit 2-6 is executing the first instruction, the VMMU 4 may be addressing E-cache to fetch the operands of the second instruction while the A unit 2-4 is generating a virtual address of the third instruction. Meanwhile, the I unit 2-2 is cracking the fourth instruction and fetching one of the subsequent instructions. Therefore, in this typical example, there could be five instructions progressing down the production line.

However, since the I unit 2-2 can execute certain branch instructions, and the A unit 2-4 can execute certain software visible register instructions, they are removed from the production line as soon as the execution of those instructions is completed. Similarly, when the A unit 2-4 is processing a branch instruction and the conditions of the branch are met, the A unit 2-4 immediately confirms the branch address of the I unit 2-2 and that branch instruction will be removed from the production line. This mode and method of operation results in increased throughput as compared to the prior art.

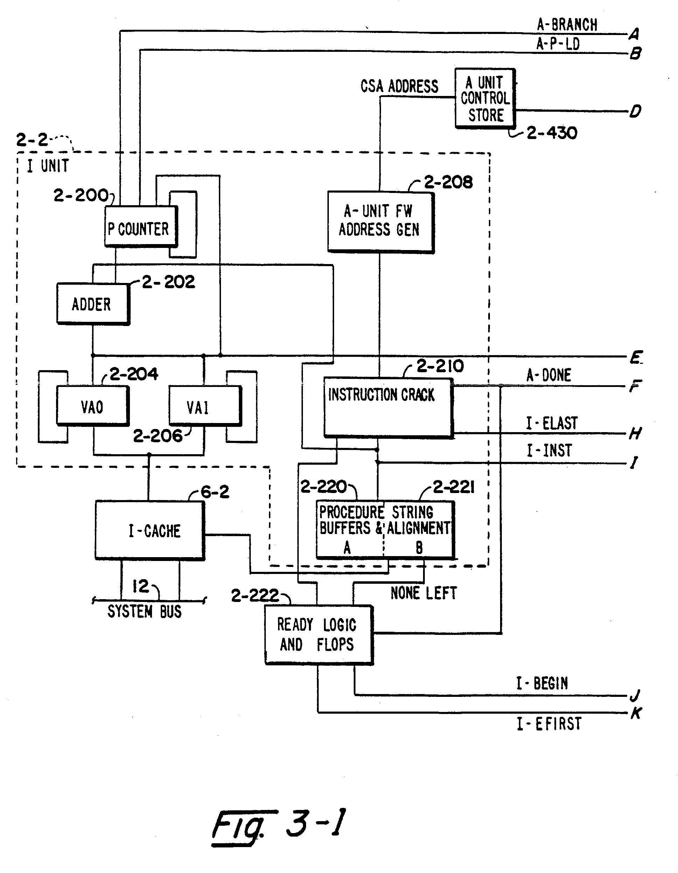

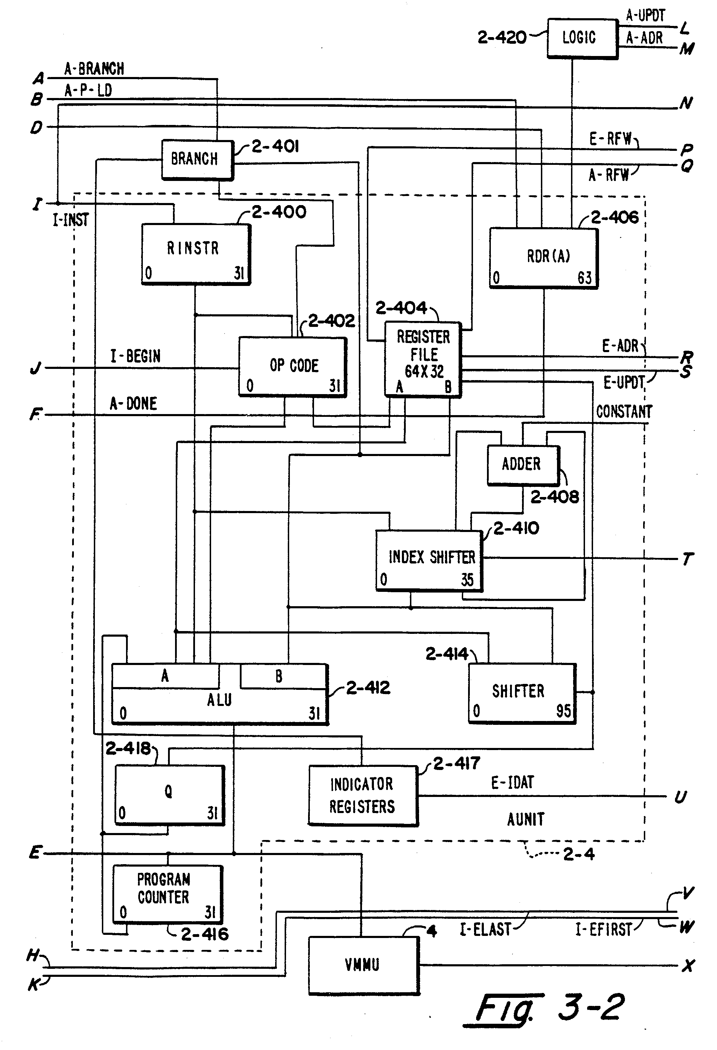

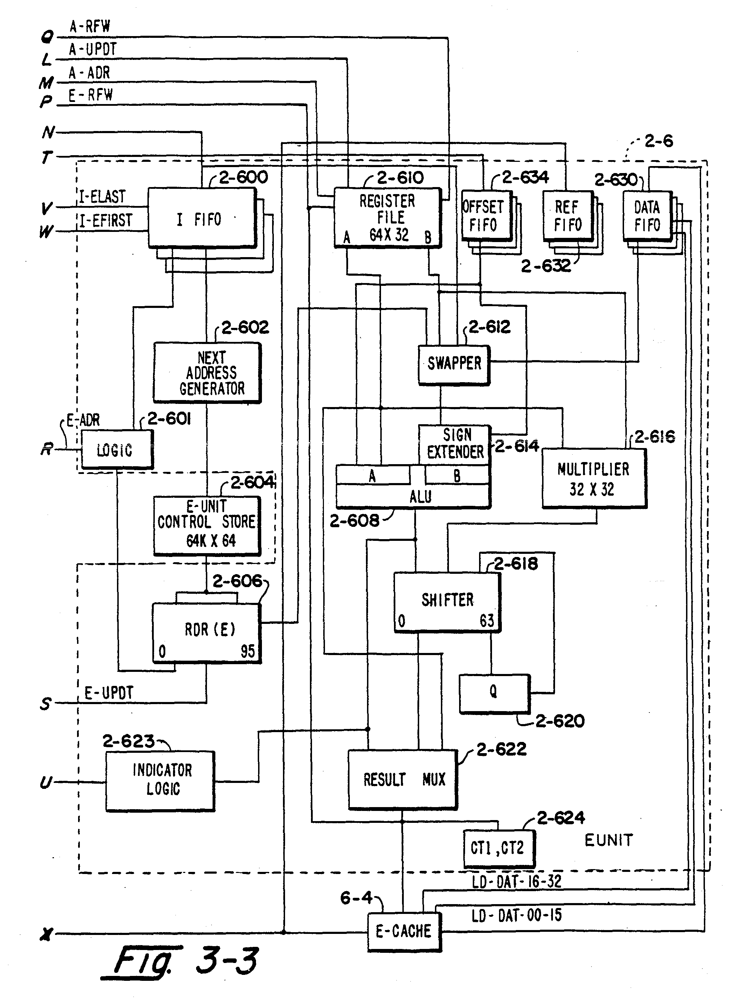

Figure 3 shows in greater detail the elements of the instruction unit 2-2, the A unit 2-4, the execution unit 2-6 and their respective interconnections. The P-counter 2-200 of the instruction unit 2-2 is loaded by the A unit 2-4 with a virtual address. This virtual address is the address in I-cache 6-2 of the location of the next instruction that is to be placed into the pipeline. During the I-FETCH cycle, the virtual address is transferred to I-cache 6-2 via an adder 2-202 and either a register VA0 2-204 or a register VA1 2-206. Either register VA0 2-204 or register VA1 2-206 is used until a branch instruction is fetched. Then, if register VA0 2-204 is active, the address called for by the branch instruction would be stored in register VA1 2-206.

The reason the branch address is held separately in the P counter 2-200 and the program counter 2-416 registers is because if it is a conditional branch, the condition may or may not be met. If the condition is not met, then no branch will result. This gives the system the choice of either using or not using the address called for by the branch. The P counter 2-200, under firmware control, is incremented by one for one word instruction, incremented by two for a double word instruction, or replaced by a branch address from the A unit 2-4.

The instruction is read out of I-cache 6-2 into either string buffers A 2-220 or string buffers B 2-221. Here again, one set of string buffers receives successive instructions from I-cache 6-2 until there is a branch instruction. Then the instruction following the branch instruction is stored in buffers in the other string. For example, if the string buffers A 2-220 were being used then the instruction following the branch instructions would be stored in the string buffers B 2-221. The throughput is improved by storing both sets of instructions in case the branch conditions are met and the A unit 2-4 fetches the branch string from string buffers B 2-221.

The instruction is then sent to the instruction crack logic 2-210 which determines the kind of instruction it is. That is, if this is a software visible register to register instruction, then it will be executed by the A unit 2-4 if it is a memory instruction that will be executed by the E unit 2-6.

The instruction is sent from the crack logic 2-210 to an A-unit firmware address generator 2-208 which addresses an A-unit control store 2-430. The contents of the addressed location is stored in an RDR (A) register 2-406 in the A unit 2-4. The instruction signals I INSTR 0-31 from the string buffers 2-220 or 2-221 are transferred to the instruction (RINSTR) register 2-400 in the A-unit 2-4. If the instruction is to be executed by the E unit 2-6 it is also stored in an instruction first in first out register (FIFO) 2-600 in the E unit 2-6. The instruction is also stored in an OP-CODE register 2-402 in the A unit 2-4 under control of a signal I-BEGIN from the I Unit 2-2. Both the RINSTR register 2-400 and the OP CODE register 2-402 store double words of 32 bits each. If an instruction requires 2 or 3 double words, then the OP CODE for that instruction remains in the OP CODE register 2-402 while each of the double words of the instruction in turn are stored in the instruction register 2-400.

The output of the OP CODE register 2-402 is used primarily for addressing a register file 2-404 under control of OP CODE and firmware bits stored in the OP CODE register 2-402 and the register RDR (A) 2-406 respectively. The register file 2-404 includes the software visible registers. If the instruction being executed is a memory instruction, then a virtual address is generated and sent to the VMMU 4 via an arithmetic logic unit (ALU) 2-412. Depending upon the instruction being executed by the A unit 2-4, the input to the ALU 2-412 may be applied to the A side, by the RINSTR register 2-400, the OP CODE register 2-402, the register file 2-404 or a program counter 2-416. ALU 2-412 B side inputs are provided by an index shifter 2-410 for index or offset operations, via an adder 2-408 or from register file 2-404. If this is a register instruction, for example, a shift operation of the contents of a software visible register in the register file 2-404, then the output of the register file 2-404 may be applied to the shifter 2-414, be shifted the number of bits specified by the instruction and stored back in the register file 2-404 in the same register from which it was read.

Indicator registers 2-417 contain the program status indicators for certain instructions including branch instructions. The register bits include an overflow indicator (or), a carry indicator (C) of the latest operation designated to offset this bit, a bit test indicator (B) representing the status of the last bit tested and an input/output indicator (I) representing the status of the last peripheral interrogate. Also included are indicators greater than (G), less than (L) and unlike signs (U) representing the results of the latest compare.

Similar indicator bits are used for scientific and commercial instructions.

Conditioned branch instructions will therefore test an indicator bit and branch if the condition is true. Other conditioned branch instructions will test the condition of selected software visible registers in the register files 2-404 and 2-610. The OP code of the branch instruction will specify the true status of the selected software visible register, namely it is less than ZERO, greater than ZERO, equal to ZERO, not equal to ZERO, less, non or equal to ZERO, odd, or even.

The branch instruction types include short displacements of up to 16 bits and big displacements of 30 bits. The branch instruction may be an unconditional branch type or a conditional branch type. The I unit 2-2 will generate the branch address for all short displacement branch instructions. It does this by adding the contents of the displacement field which is in the string buffers 2-220 or 2-221 to the contents of the P counter 2-200 by means of the adder 2-202.

The branch stream is read from I Cache 6-2 into the string buffers 2-220 or 2-221.

If the branch instruction specifies an unconditional branch then the I unit 2-2 executes the branch instruction and begins cracking the next instruction in the branch instruction stream.

If the branch instruction is a conditional branch instruction then the I unit 2-2 waits for the A unit 2-4 to make the decision on which instruction stream the I unit 2-2 will crack. Signals from OP code 2-402, register file 2-404 and the indicator register 2-417 are applied to branch logic 2-401. If RDR(A) 2-406 generates signal A-P-LD then the branch address signals from the ALU 2-412 are loaded into the P counter 2-200 and Branch Logic 2-401 generated from bit positions 46 - 50 or hexadecimal 07. Signals A-BRANCH and A-P-LD are applied to P COUNTER 2-200, the A-BRANCH signal is generated from OP CODE register signals specifying the kind of branch, the status of specified indicator register 2-417 bits and the status of certain software visible registers from the register file 2-404. If both signals are true the I unit 2-2 starts cracking the instructions in the branch instruction stream. If signals A-P-LD is true and A-BRANCH is false the I unit 2-2 continues cracking the original instruction stream.

If in the I unit 2-2, the instruction calls for a branch and has a displacement, then the displacement from the crack unit 2-210 is applied to the adder 2-202 to be added to the contents of the P counter 2-200 and stored in either register VA0 2-204 or register VA1 2-206 and applied to the I-cache 6-2.

When the A unit 2-4 has completed the execution of the instruction, an A-DONE signal is sent to the crack logic 2-210 of the I unit 2-2. This informs the I unit 2-2 to send the next instruction stored in the string buffers 2-220 or 2-221 to the A unit 2-4 and if required, to the E unit 2-6. If an instruction calls for execution by the E unit 2-6, then the I unit 2-2 sends that instruction to the instruction FIFO 2-600 under control of signal I-E-LAST and signal I-E-FIRST. These signals control the loading of the instruction FIFO 2-600.

The boolean expressions describing the signals appear in the appendix and should be referenced where appropriate. The I-BEGIN signal is received by the A unit 2-4 when the CRACK signal is generated, the system is not in a hold mode and no logic block including the clock logic is in a stall mode.

The CRACK signal is generated when the ready logic and flops 2-222 is ready to crack the instruction, the string buffers A 2-220 or string buffers B 2-221 store at least one instruction, and the A unit 2-4 had generated the A-DONE signal indicating that the A unit is available for processing the next instruction.

The I unit 2-2 generates the I-EFIRST and the I-ELAST signals by the ready logic and flops 2-222 if the instruction being cracked is to be executed by the E unit 2-6. Both signals are applied to the I FIFO 2-600. The I-EFIRST signal enables the I-FIFO 2-600 to store a double word instruction. The I-ELAST signal enables the I-FIFO 2-600 to store a single word instruction.

Note that the I unit 2-2 sends the instruction to be executed in the A unit 2-4, and only to FIFO 2-600 if the instruction is to be executed in the E unit 2-6. In the E unit 2-6, the next instruction the FIFO 2-600 will execute is applied to the next address generator 2-602 which generates the E unit control store 2-604 address location. The firmware word is stored in a register RDR (E) 2-606. The instruction FIFO 2-600 stores up to four instructions.

When the A unit 2-4 sends its virtual address to the VMMU 4, the VMMU 4 generates the physical address which addresses the E-cache 6-4. The contents of the addressed location is stored in a data FIFO 2-630 in the E unit 2-6 by signal LD-DAT-0015 and LD-DAT-1631 for a single word transfer or for a double word transfer. Signal LD-DAT-0015 also increments by one the FIFO 2-630 write address to accept the next transfer. This data is the operands on which the instruction will operate. The E-unit 2-6 executes instructions whose operands are stored in software visible registers of register file 2-630.

During the execution of an instruction by E unit 2-6, the indicator status maybe changed by indicator logic 2-623 generating signals E-IDAT 0-8 from signals received from the ALU2-608. Signals E-IDAT 0-8 update the indicator registers 2-417 in the A unit 2-4.

For certain instructions, that are executed by the E unit 2-6 that do not require operands, the A unit 2-4 generates a dummy cycle by sending the virtual address, hexadecimal 40, to the VMMU 4. This results in the E-CACHE 6-4 generating a dummy cycle by sending signal LD-DAT 1631 to the FIFO 2-630 with a "dummy" operand.

A multiplier 2-616 is coupled to the A & B ports of register file 2-610 to generate and store partial products in conjunction with the shifter 2-618 and the Q-register 2-620. The partial products are applied to a result multiplexer (MUX) 2-622 and stored in accumulator location in register file 2-610. When the multiplication is completed the final result is stored in one of the software visible registers of register file 2-610.

A swapper logic 2-612 receives operands from the B side of register file 2-610 for swapping words within double words and swapping bytes within single words. A 16-bit word is made up of two 8-bit bytes. A double word is made up of two 16-bit single words or four 8-bit bytes. A sign extender 2-614 repeats the sign of all the high order positions of a double word to the left of the first significant bit of the double word.

The CT1 and CT2 counters 2-624 are used in the calculation of the exponent of a floating point resultant. A mantissa of a floating point operand is processed through the ALU 2-608 and a shifter 2-618. These are performed in a conventional manner.

The software visible registers in both the registers files 2-404 (in the A unit 2-4) and 2-610 (in the E unit 2-6) are updated on successive cycles so that they both contain the same information. This is accomplished by firmware signals from register RDR(A) 2-406 which are applied to logic 2-420 to generate an update signal A-UPDT which enables the E register 2-610 to store data from the output of A register 2-404 at the address specified by the six A-ADR signals which are applied to the address terminals of E register 2-610. Similarly, the E-UPDT signal from register RDR(E) 2-606 enables A register 2-404 to store the data from the output of E register 2-610 at the address specified by signals E-ADR from logic 2-601. This logic 2-601 generates signals E-ADR from instruction signals from the instruction FIFO 2-600 and firmware signals from RDR(E) 2-606.

The A unit 2-4 program counter 2-416 stores the address of the next instruction. P counter 2-200 in the I unit 2-2 also stores the address of the next instruction. The reason for the two registers is that, in case of a conditional branch, P counter 2-200 in the I unit 2-2 stores the branch address in case it is to be used, whereas the program counter 2-416 will not store the branch address but stores the next address in the sequence presently being executed.

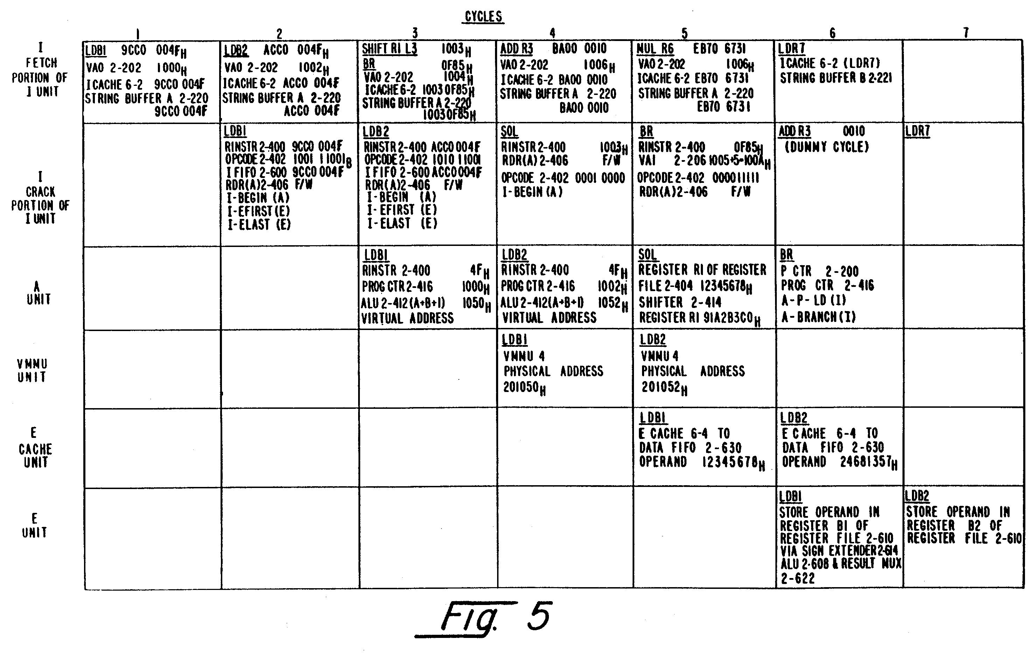

The following example shows the advantages of the production line operation of the present invention. Figure 4 shows the contents of a number of locations in the I-cache 6-2. The locations and data are shown in hexadecimal form. In the example, locations 1000 and 1001 store the 32 bit double word Load B1 Register Instruction with an offset of hexadecimal 4F. This gives that an address of 1000 plus 1 plus 4F or hexadecimal 1050 as the virtual address applied to the VMMU 4. The virtual address will point to the location of a physical address of E-CACHE 6-4. The contents of the physical address location would be loaded into register B1, which is a software visible register in both register file 2-404 in the A unit 2-4 and register file 2-610 in the E unit 2-6. Similarly, register B2 will be loaded from the 32 bit double word instruction load register B2 stored in locations 1002 and 1003. Location 1004 stores a single word instruction Shift Open Left 3 the Contents of Register R1, which is another software visible register in register files 2-404 and 2-610. Location 1005 stores a Branch instruction to add plus five to the contents of the Program counter 2-416 to point to the double word instruction Load Register R7 which is in locations 100A and 100B in I-cache 6-2.

Locations 1006 and 1007 store an add instruction ADD R3 0010 wherein the contents of register R3 is added to the contents of the memory location 0010 (E cache 6-4) and the answer stored in register R3. Locations 1008 and 1009 store a multiply instruction MUL R6 6731 wherein the contents of register R6 is multiplied by the operand 6731 and the result stored back in register R6.

Neither the add nor multiply instruction will be executed because of the unconditional branch in location 1005, however both instructions will be fetched from I Cache 6-2 but they will not be cracked.

Figure 5 shows the execution of the instructions as they pass through the stages of the pipeline. The stages shown in Figure 5 are the I-cache stage that is fetching the instruction from I-cache 6-2; the I-cache stage, which examines the instruction and determines which of the units should execute the instruction; the A unit stage which generates a virtual address or executes register or branch instructions; the VMMU stage which converts the virtual address to a physical address, the E-cache stage which sends the operand at the addressed location to the E Unit 2-6 and the E unit stage which executes the instructions.

Referring to Figure 5, during cycle 1, I FETCH fetches the Load B1 instruction, hexadecimal 9CC0 004F, from I cache 6-2 at a location specified by the contents of the VA0 register 2-204, hexadecimal 1000, and stores it in string buffer A 2-220. P counter 2-200 was initialized by the A unit 2-4 and its contents 1000 transferred to VA0 2-204 via adder 2-202. I cache 6-2 reads out the double word in locations 1000 and 1001.

I CRACK "cracks" the Load B1 instruction during cycle 2. Since this is a memory instruction, the I unit 2-2 sends the I BEGIN signal to the A unit 2-4 to enable the OP code register 2-402, and sends signals I-EFIRST and I-ELAST to the E unit 2-6 to enable the I FIFO 2-600. Also, the instruction is sent to the RINSTR register 2-400 of the A unit 2-4 and the I-F1FO 2-600 of the E unit 2-6. The OP CODE register 2-402 is loaded with the OP CODE portion of the instruction, bits 0-8 (binary 1001 11001). The A unit control store 2-430 is addressed and the firmware word is stored in the register RDR(A) 2-406.

During cycle 3 the A unit generates a virtual address. ALU 2-412 adds the low order word, hexadecimal 004F, stored in the RINSTR register 2-400, to the contents of the program counter 2-416, hexadecimal 1000, to plus one to generate the virtual address, hexadecimal 1050, which is sent to VMMU 4.

In cycle 4 of VMMU, the VMMU 4 generates a physical address hexadecimal 201050 (an arbitrary address) which addresses the E cache 6-4.

In cycle 5, E CACHE, the addressed operand, hexadecimal 12345678 (an arbitrary operand) is stored in Data FIFO 2-630.

In cycle 6 of the E unit, the operand is stored in register file 2-610 via sign extender 2-614, ALU 2-608 and RESULT MUX 2-622.

The load B2 instruction hexadecimal ACCO 0050 is processed through the production line in a similar manner. In this case the I cache 6-2 address hexadecimal 1001 is stored in VAO 2-202. Since the Load B2 instruction is a double word, the contents of the P counter 2-200 is incremented by two.

In cycle 7 of E the operand hexadecimal 24681357 was stored in register B2 of register file 2-610.

In cycle 3 of I FETCH the contents of location 1004 is read from I cache 6-2. Each odd location addressed results in two words of 16 bits each being read out. The Load B instructions were double word instructions however the double word read when location 1004 was addressed contains two instructions, a Shift R1 Left 3, instruction, hexadecimal 1003, and a Branch Instruction, hexadecimal OF85. Both instructions are loaded into string buffer A 2-220.

In cycle 4 of the I CRACK, the I unit 2-2 only accesses the A unit 2-4 since the instruction is executed exclusively in the A unit 2-4. Signal I-BEGIN loads the OP code into OP CODE register 2-402. The instruction is loaded into register RINSTR 2-400 and the firmware word is loaded into register RDR(A) 2-406.

In cycle 5 of A, the contents of R1, hexadecimal 12345678, is passed through shifter 2-414 and stored back into R1 as hexadecimal 91A2B3CO.

Note that the shift instruction was executed after three cycles and then dropped out of the pipeline.

Cycle 5 of I CRACK loads register RINSTR 2-400 with the Branch instruction hexadecimal OF85. Register VA1 2-206 now stores hexadecimal (1005 plus 5) 100A. The displacement 5 from crack control 2-210 is added to the contents of register VA1.

Even though there is an unconditional branch to location 100A from location 1005, during I FETCH , cycle 4, the add instruction BA00 0010 is fetched and stored in the string buffer A 2-202. It is not cracked during I CRACK of cycle 6 since string buffer B 2-221 is now active. I CRACK cycle 6 is a dummy cycle.

During cycle 6 the A unit generates signals A-P-LD and A-BRANCH to load P counter 2-200 with the branch address. The A unit also loads the program counter 2-416 with the branch address.

During I FETCH of cycle 5, the multiply instruction is loaded into string buffer A 2-220, it also is not cracked. However, during cycle 7 of I CRACK, the LDR7 instruction is cracked.

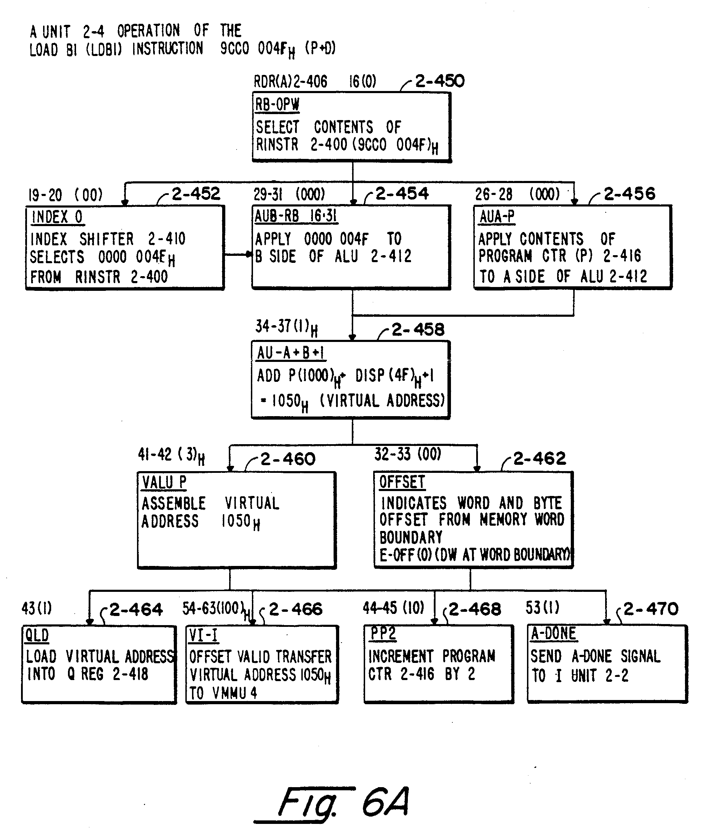

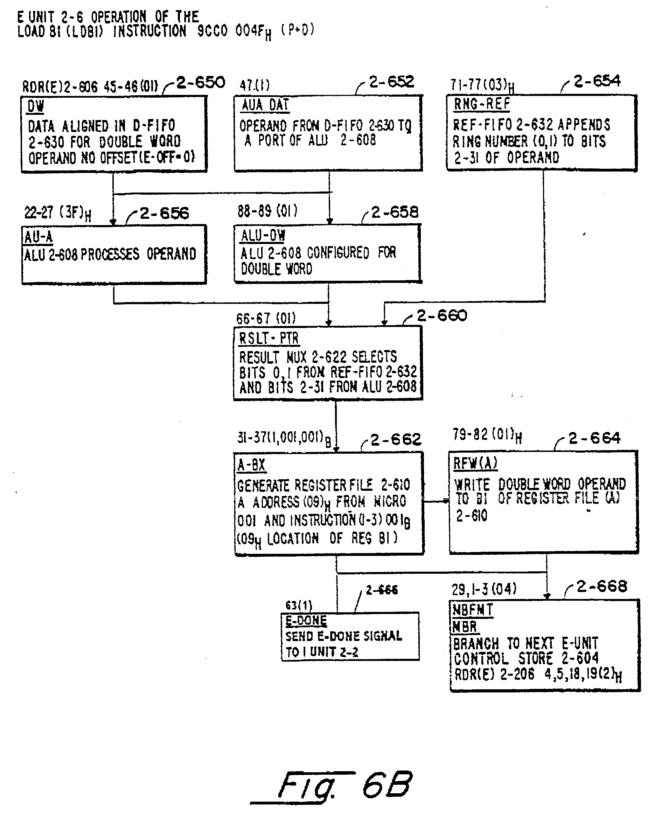

Figures 6A and 6B show in block diagram form the firmware steps taken by the A unit 2-4 and the E unit 2-6 respectively in executing the Load B1 instruction of Figure 4.

Each block shows the firmware bits and their values in the RDR (A) 2-406 or the RDR E 2-606 registers. The neumonic recognized by the firmware is shown underlined within the block, as well as the function performed by the block.

As an example block 2-458 of Figure 6A shows that bits 34 through 37 of register RDR (a) 2-406 have a value of hexadecimal 1 (binary 0001). The function performed is to add the value of the A input ALU 2-412 to the value at the B input of ALU 2-412 to plus ONE to generate the virtual address.

Referring to Figure 6A, the A unit 2-4 generates the virtual address of the operand, sends it to the VMMU4, and notifies the I unit 2-2 that the A unit 2-4 has completed its portion of the load B1 instruction. All of the firmware steps are completed in one cycle, cycle 3 of A in figure 5. The firmware blocks are shown approximately in the order in which they are executed.

As seen from block 2-450, bit 16 of the RDR(A) register 2-406 is at binary 0. The micro operation RB-OPW transfers the contents of the RINSTR register 2-406, hexadecimal 9CC0 004F to block 2-452.

Block 2-452, MICRO INDX 0 (bits 19 and 20 of RDR (A) 2-406 are at binary 00) selects the right word of the instructions, hexadecimal 0050, and block 2-454, micro AUB-RB 16:31 (bits 29-31 at binary 0) applies the right word to the B input of ALU 2-412.

Block 2-456, MICRO AUA-P (bits 26-28 a binary 0) applies the contents of the program counter 2-416, hexadecimal 1000, to the A input of ALU 2-412.

Block 2-458 MICRO AU-A+B+I (bits 34-37 at hexadecimal 1) generates the virtual address hexadecimal 1050 (1000+4F+1) in the ALU 2-412.

Block 2-460, MICRO VALU-P (bits 41-42 at hexadecimal 3) selects the virtual address from the ALU 2-412 by a MUX (not shown).

Block 2-462, MICRO OFFSET (bits 32-33 at binary 0) tests that the operand in the E cache 6-4 appears at a word boundary. Otherwise the firmware would call for two E cache cycles to read out the contents of the two double word storing the operand. E-OFF is therefore binary 0. The E-OFFSET is applied to the offset FIFO 2-634 from the index shifter 2-410.

Block 2-464, MICRO QLD (bit 43 at binary 1) loads the virtual address into the Q register 2-418 as a backup.

Block 2-468, MICRO PP2 (bits 44-45 at binary 10) increments the program counter 2-416 and in turn the P counter 2-200 in the I unit 2-2 to read the next instruction from I cache 6-2.

Block 2-470, MICRO A-DONE (bit 53 at binary 1) sends the A-DONE signal to the I unit 2-2. The I unit then sends the next instruction to the A unit 2-4.

Referring to Figure 6B, the E unit 2-6 completes the execution of the LDBI instruction by receiving the operand from the E cache 6-4 and storing it in B1 of register file 2-610.

Block 2-650 shows that bits 45-46 of the RDR(E) register 2-606 are at binary 01. The MICRO DW aligns the double word operand in DFIFO 2-630. E-OFF at binary 0 indicates no offset.

Block 2-652, MICRO AUA DAT (bit 47 at binary 1) transfers the operand from D FIFO 2-630 to the A input of ALU 2-608.

Block 2-658, MICRO ALU-DW (bits 88-89 at binary 01) configures ALU 2-608 to process the operand as a double word.

In block 2-660, MICRO RSLT-PTR (bits 66-67 at binary 01) the RESULT MUX 2-622 selects bits 0 and 1 of the operand the ring number from REF-FIFO 2-632 and bits 2-31 of the operand from the ALU 2-608.

Block 2-662 MICRO A-BX (bits 31-37 at binary 1, 0010 001 generates the register file 2-610 A address of B1, hexadecimal 09, from bits 001 from the firmware word and bits 1-3 from the instructions word.

Block 2-664 MICRO RFW(A) (bits 79-82 at hexadecimal 01) writes the double word operand to B1 of register file 2-610 from the RESULT MUX 2-622.

Block 2-666, MICRO DONE (bit 63 at binary 1) sends the E-DONE signal to the I unit 2-2 which resets the instruction crack logic 2-210 associated with the Load B1 instruction.

Block 2-668, MICRO MBFMT MBR (bits 29, 1-3 at hexadecimal 04) branches to the next E unit control store 2-604 location and loading RDR(E) 2-606 with the next firmware word.

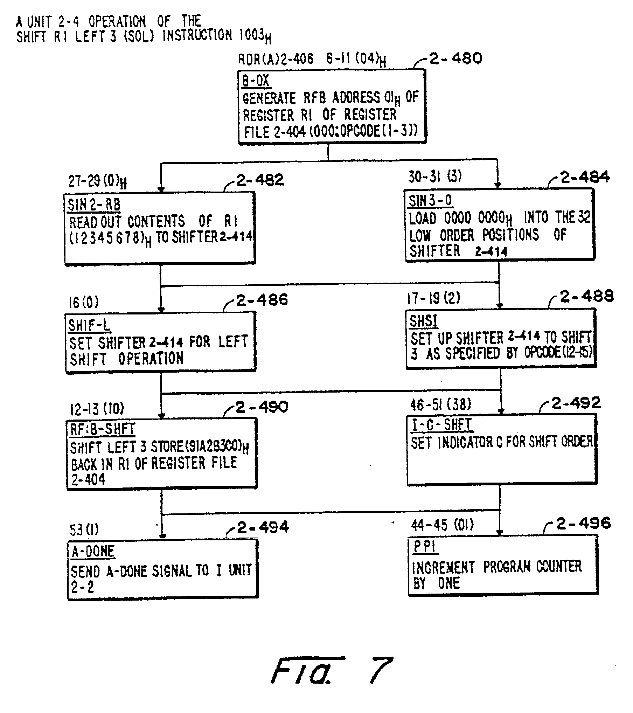

Figure 7 shows, in block diagram form, the firmware steps taken by the A unit 2-4 to execute the shift R1 Left 3 instruction. Referring to figure 7, cycle 3 of the I FETCH stage fetches the shift R1 left 3 (SOL) instruction hexadecimal, 1003 from I cache 6-2 and loads it into buffer string A 2-220, the instruction is cracked in cycle 4 and loaded into the RINSTR register 2-400 and the OP CODE register 2-402. Signal I-BEGIN enables the OP CODE register 2-402. Cycle 5 completes the execution of the SOC instruction by reading out the contents of RI in register file 2-404 (hexadecimal 12345678), shifting left 3 bits and storing the result (hexadecimal 91A2B3C0) back in R1.

The A unit 2-4 is controlled by the firmware word read from control store 2-430 and stored in ROR(A) 2-406.

As seen from block 2-480, the micro-operation MICRO B-DX specified by bits 6-11 in RDR(A) 2-406 at hexadecimal 04 generates the RFB address, hexadecimal 01, in register file 2-404. The address is generated by appending the OP code register 2-402 bits 1 through 3 to 000 to obtain the (000001) address of R1.

Block 2-482 MICRO SIN2 - RB (bits 27-29 at hexadecimal 0) reads out the contents of RI to shifter 2-414. Block 2-484 MICRO SIN 3-0 (bits 30-31 at binary 11) loads 0's into the 32 low order positions of shifter 2-414. Block 2-486, MICRO SHIF-L (bit 16 at binary 0) conditions shifter 2-414 for the left shift operation. Block 2-488, MICRO SHSI (bits 17-19 at hexadecimal 2) sets up shifter 2-414 to shift 3 as specified by OP code 2-402 bits 12-15.

Block 2-490, MICRO RF: B-SHFT (bit positions 12-13 at binary 10) shifts the operand left 3 bits and stores it back in R1 of register file 2-404.

Block 2-492, MICRO I-C-SHFT (bit positions 46-51 at hexadecimal 38) sets the C indicator (not shown) of indicator registers 2-417 for the shift order.

Block 2-494, MICRO A-DONE (bit 53 binary 1) sends the A-DONE signal to the I unit 2-2. The I unit 2-2 then cracks the next instruction to be executed and sends it to the A unit 2-4.

Block 2-496 MICRO PP1 (bits 44-45 at binary 01) increments the program counter 2-416 by ONE since SOL is a single word instruction.

While the invention has been shown and described with reference to the preferred embodiment thereof, it will be understood by those skilled in the art that the above and other changes in form and detail may be made therein without departing from the scope of the invention as defined by the appended claims.

APPENDIX A

The neumonics of the instructions are shown in the following document which is commercially available from Honeywell Bull Inc., Hardware Version of DPS6 Programmers Pocket Guide CU75-02 (Aug. '84). The notations in the boolean equations are as follows:

EQ 0100 EQUAL TO HEXADECIMAL 0100
GT 3 GREATER THAN HEXADECIMAL 3
EQ 2 NOT EQUAL TO HEXADECIMAL 2
NLT 018 NOT LESS THAN HEXADECIMAL 018
NGT 01E NOT GREATER THAN HEXADECIMAL 01E
LT 3 LESS THAN HEXADECIMAL 3

The I-BEGIN signal is generated by the boolean equation:

$$I\text{-}BEGIN = CRACK \ \& \ ^{\wedge}STALL \ \& \ ^{\wedge}HOLD$$

$$CRACK = READY \ \& \ ^{\wedge}NONELEFT \ \& \ ADONE$$

The ^ signifies a negated signal, i.e. ^HOLD should be read as the "NOT HOLD" signal.
The boolean equation for the I-EFIRST and I-ELAST signals are:

$$I\text{-}EFIRST = CRACK \ \& \ ^{\wedge}STALL \ \& \ EINSTR$$

$$I\text{-}ELAST = I\text{-}EFIRST \ (^{\wedge}MSK + (SIZE \ EQ \ 2) + BII)$$

$$+ \ (^{\wedge}HOLD \ \& \ MSK \& ^{\wedge}EII \& \ CRACK \ \& \ ^{\wedge}STALL \ \& \ NOTSTO \ \& \ RSIZE \ EQ \ 2)$$

The boolean equation for Signal EINSTR is generated as a function of combinations of bits of the different types of instructions that require execution by the E unit 2-6. The boolean equation is:

$$EINSTR = GCS + (IO + IOLD + SC + MASK + BIT4 + LB +$$

$$LEV + INCDEC \ \& \ ^{\wedge}RAS + MTM + MUL + DIV + STM +$$

$$SSBP) \ \& \ ^{\wedge}EII + (BSTORE + EBIM0) \ \& \ IMO + EMSK$$

$$\& \ EII + MLV \ \& \ (SI + ESI \ \& \ EII1) + (ESO + EDO) \ \&$$

$$(^{\wedge}ERAS \& (EII1 + EII23) + AS3EII45) + EEII \ \&$$

$$(EII1 + EII23) + (SDO + SO) \ \& \ ^{\wedge}RAS \ \& \ ^{\wedge}IMO \ \& \ ^{\wedge}EII$$

DESCRIPTION OF EQUATION TERMS

GENERIC, COMMERCIAL, OR SCIENTIFIC INSTRUCTIONS

$$GCS = I\text{-}INST \ (0\text{-}8) \ EQ \ O;$$

IO INSTRUCTION

$$IO = (I\text{-}INST \ (0\text{-}8) \ EQ \ 0100)$$

IOLD INSTRUCTION

IOLD = I-INST (0-8) EQ 0103

SINGLE OPERAND INSTRUCTION

SO = (I-INST (0-3) EQ 8 & ((I-INST (4-8) EQ 1) +

(I-INST (4-8) GT 3))

SINGLE OPERAND INSTRUCTION THAT USES B REGISTERS IN THE E UNIT 2-6

SSBP = I-INST (0-8) EQ 0106

SINGLE OPERAND INSTRUCTIONS THAT USE OVERFLOW: (NEG, CAD, AID, SID, INC.,DEC. INSTRUCTIONS)

SOV = SO & ((I-INST (4-8) EQ 4) + (I-INST (4-8) EQ

01D) + (I-INST (4-7) EQ 4)) + INCDEC

LB INSTRUCTION

LB = SO & (I-INST (4-8) EQ 05)

BIT INSTRUCTIONS (LBF, LBT, LBC, LBS)

BIT4 = (I-INST (0-5) EQ 022) & (I-INST (8) EQ 0)

BASIC DOUBLE OPERAND OR SCIENTIFIC INSTRUCTIONS

SDO = (I-INST (0-3) GT 8) & (I-INST (4-8) NEQ 2)

BASIC INSTRUCTIONS WITH IN-LINE MASK WORD: (SRM, NSAVE, NRSTR, SAVE, RSTR)

MASK = (I-INST (0) EQ 1) & (RLBP NEQ ) & (I-INST (4-8)

EQ 015) + (I-INST (0-7) EQ 085) + (I-INST (0-7) EQ 08F)

SCIENTIFIC SINGLE AND DOUBLE OPERAND INSTRUCTIONS

SC = ((I-INST (0-3) GT 8) & ((I-INST (4-8) EQ 011) +

(I-INST (4-8) EQ 013 + (I-INST (4-8) EQ 018) + (I-INST

(4-8) EQ 01A))) & $^\wedge$ EII1 & $^\wedge$EII23 & $^\wedge$AS3EII45

DOUBLE OPERAND INSTRUCTIONS THAT USE M REG AND DON'T STOP PIPELINE

$$STM = (I\text{-}INST\ (O)\ EQ\ 1)\ \&\ (RLBP\ NEQ\ 0)\ \&\ (I\text{-}INST\ (4\text{-}8)$$

$$EQ\ OE)$$

WHERE

$$RLBP = I\text{-}INST\ (1\text{-}3)$$

MULTIPLY INSTRUCTION

$$MUL = (I\text{-}INST\ (0)\ EQ\ 1)\ \&\ (RLBP\ NEQ\ 0)\ \&\ (I\text{-}INST\ (4\text{-}8)$$

$$EQ\ 016)$$

DIVIDE INSTRUCTION

$$DIV = (I\text{-}INST\ (0)\ EQ\ 1)\ \&\ (RLBP\ NEQ\ 0)\ \&\ (I\text{-}INST1\ (4\text{-}8)$$

$$EQ\ 06)$$

MODIFY OF TEST REGISTER M INSTRUCTION

$$MTM = (I\text{-}INST\ (0\text{-}3)\ GT\ 8)\ \&\ (I\text{-}INST\ (4\text{-}8)\ EQ\ 0)$$

(INSTRUCTIONS THAT STOP PIPELINE IF THEY INCLUDE AN IMMEDIATE OPERAND (IMO)NEG, SSBP, CPL, CALL, CL, CLH, LBF, DEC, LBT, LBS, INC, LBC, STS, SDI, CAD (ALSO LE) STM, STH, SRM, SWR, SWB, STR, STB, ARE SO, DO

$$BSTORE = SO\ \&\ ((I\text{-}INST(4\text{-}8)\ EQ\ 4)\ +\ (I\text{-}INST(4\text{-}8)\ EQ\ 6)$$

$$+\ (I\text{-}INST(4\text{-}6)\ EQ\ 3)\ +\ (I\text{-}INST(4\text{-}7)\ EQ\ OA)\ +$$

$$(I\text{-}INST(4\text{-}7)\ EQ\ 8)\ +\ (I\text{-}INST(4\text{-}8)\ EQ\ 018)\ +$$

$$(I\text{-}INST(4\text{-}8)\ EQ\ 01A)\ +\ (I\text{-}INST(4\text{-}7)\ EQ\ OE))\ +\ BIT4\ +$$

$$SDO\ \&\ ((I\text{-}INST(5\text{-}7)\ EQ\ 7)\ +\ (I\text{-}INST(4\text{-}8)\ EQ\ 015)\ +$$

$$(I\text{-}INST(4\text{-}6)\ EQ\ 7))$$

SHORT VALUE IMMEDIATE INSTRUCTION

$$SI = (I\text{-}INST(0).EQ.0)\ \&\ (RLBP.NEQ.O)\ \&$$

$$(I\text{-}INST(4\text{-}7).GT.OB)$$

IMO INSTRUCTIONS THAT USE B REG IN E UNIT 2-6 (LDB, LAB, STB, SWB)

EBIMO = (I-INST(0-3) GT 8) & ((I-INST(4-8) EQ 019) +

(I-INST(4-8) EQ 017) + (I-INST(4-8) EQ 01D) +

(I-INST(4-8) EQ 01F))

LEV INSTRUCTION

LEV = SO & (I-INST(4-8) EQ 01C)

INC AND DEC INSTRUCTIONS

INCDEC = SO & ((I-INST(48) EQ O11) + (I-INST (4-8) EQ

015))

MLV OR MLVK INSTRUCTION

MLV = I-INST(6-7) EQ 3

EXTENDED INTEGER SINGLE OPERAND INSTRUCTION

ESO = (I-INST(0-3) EQ 8) & (I-INST(4-8) NLT 018) &

(I-INST(4-8) NEQ 01B) & (I-INST(4-8) NGT 01E)

EII SO THAT USE OVERFLOW & DON T STOP PIPELINE: KINC, KDEC, KNEG, KNEGB INSTRUCTIONS

ESOV = ESO & (I-INST(6-7) LT 3) & (I-INST(6-8) NEQ 1)

E11 SHORT VALUE IMMEDIATE INSTRUCTION

ESI = EBK & (I-INST(8) EQ 1)

EXTENDED INTEGER DOUBLE OPERAND INSTRUCTION

EDO = (I-INST(0-3) GT 8) & (I-INST(4-7) NLT 4)

EXTENDED INTEGER INSTRUCTION (EII) INSTR WITH IN-LINE MASK DOUBLEWORD

EMSK = (I-INST(0) EQ 1) & (RLBP NEQ 0) & (I-INST(4-8)

EQ OF)

WHERE

RLBP = I-INST (1-3)

E11 INSTRUCTIONS EXECUTED IN E UNIT 2-6 THE INSTRUCTION INCLUDES A REGISTER ADDRESS
SYLLABLE (RAS) OR AN (IMO) (KDIV, KMUL, KMULP, KDIVP, KSKM INSTRUCTIONS)

EEII = KDIV + KMUL + KDIVP + KMULP

KDIV = (I-INST(0) EQ 1) & (RLBP NEQ 0) & (I-INST(4-8)

EQ 017)

KMUL = (I-INST(O) EQ 1) & (RLBP NEQ 0) & (I-INST(4-8)

EQ 01C)

KDIVP = (I-INST(0) EQ 1) & RLBP NEQ 0) & (I-INST(4-8)

EQ 0IC)

KMULP = (I-INST(0) EQ 1) & (RLBP NEQ 0) & (I-INST(4-8)

EQ 01E)

EII1 = I-INST(9-15) EQ 06C

EII23 = I-INST(9-15) EQ 07C

AS3EII45 = I-INST(9-15) EQ 058

RAS = (I-INST(9-11) EQ 5) & (I-INST(12) EQ 0) &

(I-INST(13-15) NEQ 0)

IMO = I-INST(9-15) EQ 070

KAS = (I-INST(23-28) EQ 01A) & NC

ERAS = (I-INST(24-28) EQ 01A) & NC

NC = I-INST (29-31) NEQO

II = EII1 + EII23 + AS3EII45

## Claims

1. Apparatus (2) for executing instructions in a data processing system in a pipeline mode, having a plurality of series connected pipeline processors (2-2, 2-4, 2-6) arranged to form a production line, and having memory means for storing instructions (6-2) and operands (6-4), wherein said instructions which are of different type are supplied in succession from the instruction memory (6-2) to said apparatus (2) for execution;
said pipeline processors (2-2, 2-4, 2-6) which are coupled together and connected to said memory means are provided to execute instruction parts in sequential order wherein each pipeline processor executes a different function on each of said plurality of instructions which are applied to said production line, comprising :

   - a first pipeline processor (2-2) for instruction decoding and branch operation execution, comprising:

     - a first storing means (2-220/221) for storing each of said plurality of instructions fetched from the instruction memory (6-2);
     - a decoding means (2-210) coupled to said first storing means;
     - a first execution means (2-200, 2-202, 2-204, 2-206) coupled to said first storing means and to said decoding means for the execution of branch operations thereby removing the said branch instruction (BR) from the said production line;

   and characterized by the fact that said decoding means specify different types of instructions (BR, SOL, LDB, ADD, MUL) by first and second control signals (I-BEGIN; I-EFIRST, I-ELAST) and by:

   - a second pipeline processor (2-4) for address generation and shift operation execution, comprising:

     - a second storing means (2-400) for storing the said different types of instructions, the loading of the said instructions being enabled by the first control signal (I-BEGIN);
     - a first address generating means (2-401, 2-416, 2-417) coupled to said second storing means and to said first execution means for generating a first address in response to a branch instruction (BR), said first address specifying a location of instructions in said instruction memory (6-2) to be branched to and fetched next for execution;
     - a second address generating means (2-412, 2-416) coupled to said second storing means and to the operand memory (6-4) for generating a second address in response to a memory instruction (LDB, ADD, MUL), said second address specifying a location of operands in said operand memory (6-4) which are required for the execution of the said memory instruction;
     - a second execution means (2-412, 2-414) coupled to said second storing means and to said decoding means for the execution of shift operations, having control signal generating means (2-406) for generating a third control signal (A-DONE) for indicating to said decoding means (2-210) when said second pipeline processor (2-4) has completed the operation on the instruction stored in said second storing means (2-400) or when it has completed its share on the execution of a memory instruction, thereby removing any register-to-register instruction (SOL) from the said production line;

   - a third pipeline processor (2-6) for operand retrieval and logical/arithmetic operation execution, comprising:

     - a third storing means (2-600, 2-630) for storing the operands fetched from the operand memory (6-4) and for storing memory instructions (LDB, ADD, MUL), the loading of the said memory instructions being enabled by the second control signal (I-EFIRST, I-ELAST); and
     - a third execution means (2-608, 2-616, 2-618, 2-622) coupled to said third storing means and to the operand memory (6-4) for execution completion of logical/arithmetic operations thereby removing the related memory instruction from the said production line.

2. The apparatus of claim 1, characterized in that said first pipeline processor (2-2) comprises fetching means (2-204/206) for fetching said each of said plurality of instructions from an instruction cache (6-2) of said memory means in response to a sequence of address signals supplied by a first program counter (2-200) comprised in said first execution means and storing the said instructions in said first storing means (2-220/221).

3. The apparatus of claim 1, characterized in that said first execution means comprise a first program counter (2-200) for storing addresses of locations in said instruction memory (6-2) of said each of said plurality of instructions, and that in the course of executing a branch instruction (BR) the said first address is supplied from a second program counter (2-416) which is part of the said first address generating means to the said first program counter (2-200) and is stored therein.

4. The apparatus of claim 3, characterized in that the first address generating means and the second address generating means have the said second program counter (2-416) in common and that the said first program counter (2-200) and the said second program counter (2-416) both store the address of the next instruction.

5. The apparatus of claim 2, characterized in that the addresses stored in said first program counter (2-200) identify locations in the instruction cache (6-2) of said memory means and that said first storing means (2-220/221) store the instructions received from said instruction cache (6-2).

6. The apparatus of claim 1, characterized in that said first, second and third pipeline processors (2-2, 2-4, 2-6) are connected by an instruction bus (I-INST) over which each of said plurality of instructions is transmitted from the said first storing means (2-220/221) to the said second storing means (2-400) under control of the said first control signal (I-BEGIN), and that, in addition, each memory instruction (LDB, ADD, MUL) is transmitted also to the said third storing means (2-600) under control of the said second control signal (I-EFIRST, I-ELAST).

7. The apparatus of claim 1, characterized in that said decoding means (2-210) is responsive to said third control signal (A-DONE) for decoding a next of said plurality of instructions.

8. The apparatus of claim 6, characterized in that said first, second and third pipeline processors (2-2, 2-4, 2-6) are connected under control of a ready logic means (2-222) responsive to said third control signal (A-DONE) and a plurality of instruction signals from said decoding means (2-210) and said first storing means (2-220/221) for generating said first and second control signals (I-BEGIN; I-EFIRST).

9. The apparatus of claim 1, characterized by an address translation unit (4) coupled to said second address generating means (2-412, 2-416) and to an operand cache (6-4) of said memory means for translating virtual address signals into physical address signals for retrieving the operands required for memory instruction execution from said operand cache (6-4) and for their storage in a data first-in/first-out register (2-630) of the third pipeline processor (2-6).

10. A method of executing instructions in a data processing apparatus in a serial pipeline fashion wherein said instructions are of at least first (SOL) and second (LDB, ADD, MUL) types, said apparatus comprising at least three pipeline processors (2-2, 2-4, 2-6) coupled together in a production line to execute at least parts of instructions in sequential order wherein each of said pipeline processors performs a different operation on each of said instructions,
wherein

- said instructions are decoded by said first pipeline processor (2-2) and characterized in that :
- said first pipeline processor (2-2) identifies the type of instruction by control signals (I-BEGIN; I-EFIRST, I-ELAST) and specifies which ones of the sequentially coupled pipeline processors will become involved in processing and executing these different types of instructions;
- said first type of instruction (SOL) is controllably transmitted from said first pipeline processor (2-2) to said second pipeline processor (2-4) for the execution of address generation operations not requiring additional data from memory; and
- said second type of instruction (LDB, ADD, MUL) is controllably transmitted from said first pipeline processor (2-2) to both the second pipeline processor (2-4) for a first execution-in-part involving address generation operations and to the third pipeline processor (2-6) for a second execution-in-part wherein said second execution-in-part by said third pipeline processor (2-6) follows said first execution-in-part by said second pipeline processor (2-4), and wherein said second execution-in-part by said third pipeline processor (2-6) comprises the execution of a function called for by said second type instruction on an operand read from a location in a memory means (6-4) whose address was developed by said first execution-in-part by said second pipeline processor (2-4).

11. The method of claim 10, wherein said first type instruction is a register-to-register instruction (SOL) involving shift operations.

12. The method of claim 10, wherein said second type instruction is a memory instruction (LDB, ADD, MUL) involving logical/arithmetic operations requiring the supply of operands from memory (6-4).

13. The method of claim 10, characterized by instructions of a third type (BR) which are processed by the said first and second pipeline processors (2-2, 2-4) and executed by said first pipeline processor (2-2) to effect the branching to another instruction stream.

14. The method of claim 13, wherein said third type instruction is an unconditional branch instruction.

**Patentansprüche**

1. Vorrichtung (2) zum Ausführen von Befehlen in einem Datenverarbeitungssystem in einem Pipeline-Modus, mit einer Mehrzahl von seriell verbundenen Pipeline-Prozessoren (2-2, 2-4, 2-6), angeordnet zur Bildung einer Produktionslinie, und mit Speichermitteln zum Speichern von Befehlen (6-2) und Operanden (6-4), wobei die Befehle, welche von verschiedenem Typ sind, nacheinander von dem Befehlsspeicher (6-2) der Vorrichtung (2) zur Ausführung zugeführt werden;
wobei die Pipeline-Prozessoren (2-2, 2-4, 2-6), welche zusammengekoppelt sind und mit den Speichermitteln verbunden sind, vorgesehen sind zum Ausführen von Befehlsteilen in sequentieller Reihenfolge, wobei jeder Pipeline-Prozessor eine unterschiedliche Funktion auf jedem der Mehrzahl von Befehlen ausführt, welche der Produktionslinie zugeführt werden, aufweisend:

- einen ersten Pipeline-Prozessor (2-2) zum Befehlsdekodieren und zur Verzweigungsoperations-Ausführung, aufweisend:

  - ein erstes Speichermittel (2-220/221) zum Speichern jedes der von dem Befehlsspeicher (6-2) abgerufenen Mehrzahl von Befehlen;
  - ein Dekodiermittel (2-210), verbunden mit dem ersten Speichermittel;
  - ein erstes Ausführungsmittel (2-200, 2-202, 2-204, 2-206), verbunden mit dem ersten Speichermittel und dem Dekodiermittel zur Ausführung von Verzweigungsoperationen, wobei der Verzweigungsbefehl (BR) von der Produktionslinie entfernt wird;

  und **gekennzeichnet**
  durch die Tatsache, daß das Dekodiermittel verschiedene Typen von Befehlen (BR, SOL, LDB, ADD, MUL) durch erste und zweite Steuersignale (I-BEGIN; I-EFIRST, I-ELAST) spezifiziert, und durch:

- einen zweiten Pipeline-Prozessor (2-4) zur Adress-Erzeugung und zur Schiebeoperations-Ausführung, aufweisend:

  - ein zweites Speichermittel (2-400) zum Speichern der verschiedenen Typen von Befehlen, wobei das Laden der Befehle durch das erste Steuerungssignal (I-BEGIN) ausgelöst wird;
  - ein erstes Adresserzeugungs-Mittel (2-401, 2-416, 2-417), gekoppelt mit dem zweiten Speichermittel und dem ersten Ausführungsmittel zum Erzeugen einer ersten Adresse in Antwort auf einen Verzweigungsbefehl (BR), wobei die ersten Adresse eine Stelle von Befehlen in dem Befehlsspeicher (6-2), wohin zu verzweigen ist und welche als nächste zur Ausführung abzurufen ist, spezifiziert;
  - ein zweites Adresserzeugungs-Mittel (2-412, 2-416), gekoppelt mit dem zweiten Speichermittel und mit dem Operandenspeicher (6-4) zum Erzeugen einer zweiten Adresse in Antwort auf einen Speicherbefehl (LDB, ADD, MUL), wobei die zweite Adresse eine Stelle von Operanden in dem Operanden-speicher (6-4) spezifiziert, welche für die Ausführung des Speicherbefehls gefordert werden;
  - ein zweites Ausführungsmittel (2-412, 2-414) gekoppelt mit dem zweiten Speichermittel und mit dem Dekodiermittel zur Ausführung von Schiebeoperationen, mit Steuerungssignal-Erzeugungsmitteln (2-406) zum Erzeugen eines dritten Steuerungssignals (A-DONE) zum Benachrichtigen des Dekodiermittels (2-210), wenn der zweite Pipeline-Prozessor (2-4) die Operation auf dem in dem zweiten Speichermittel (2-400) gespeicherten Befehl beendet hat oder wenn er seinen Anteil an der Ausführung eines Speicherbefehls beendet hat, wobei jeder beliebige Register-zu-Register-Befehl (SOL) von der Produktionslinie entfernt wird;

- einen dritten Pipeline-Prozessor (2-6) zum Operanden-Abrufen und zur Ausführung von logisch/arithmetischen Operationen, aufweisend:

- ein drittes Speichermittel (2-600, 2-630) zum Speichern der von dem Operanden-Speicher (6-4) abgerufenen Operanden und zum Speichern von Speicherbefehlen (LDB, ADD, MUL), wobei das Laden der Speicherbefehle durch das zweite Steuerungssignal (I-EFIRST, I-ELAST) ausgelöst wird; und
- ein drittes Ausführungsmittel (2-608, 2-616, 2-618, 2-622), gekoppelt mit dem dritten Speichermittel und mit dem Operanden-Speicher (6-4) zum Ausführen der Vollendung von logisch/arithmetischen Operationen, wobei der betreffende Speicherbefehl von der Produktionslinie entfernt wird.

2. Vorrichtung gemäß Anspruch 1, dadurch gekennzeichnet, daß der erste Pipeline-Prozessor (2-2) Abrufmittel (2-204/206) aufweist zum Abrufen jedes der Mehrzahl von Befehlen von einem Befehls-Cache (6-2) des Speichermittels in Antwort auf eine Folge von Adress-Signalen, zugeführt durch einen ersten Programm-Zähler (2-200), der in dem ersten Ausführungsmittel enthalten ist, und Speichern der Befehle in dem ersten Speichermittel (2-200/241).

3. Vorrichtung gemäß Anspruch 1, dadurch gekennzeichnet, daß die ersten Ausführungsmittel einen ersten Programm-Zähler (2-200) aufweisen zum Speichern von Adressen von Stellen in dem Befehlsspeicher (6-2) jedes der Mehrzahl von Befehlen
und daß in dem Verlauf des Ausführens eines Verzweigungsbefehls (BR) die erste Adresse von einem zweiten Programm-Zähler (2-416), der Teil des ersten Adress-Erzeugungsmittels ist, dem ersten Programm-Zähler (2-200) zugeführt wird und dort gespeichert wird.

4. Vorrichtung gemäß Anspruch 3, dadurch gekennzeichnet, daß das erste Adress-Erzeugungsmittel und das zweite Adress-Erzeugungsmittel den zweiten Programm-Zähler (2-416) gemeinsam haben und daß der erste Programm-Zähler (2-200) und der zweite Programm-Zähler (2-416) beide die Adresse des nächsten Befehls speichern.

5. Vorrichtung gemäß Anspruch 2, dadurch gekennzeichnet, daß die in dem ersten Programm-Zähler (2-200) gespeicherten Adressen Stellen in dem Befehls-Cache (6-2) des Speichermittels identifizieren und daß die ersten Speichermittel (2-200/221) die von dem Befehls-Cache (6-2) empfangenen Befehle speishern.

6. Vorrichtung gemäß Anspruch 1, dadurch gekennzeichnet, daß die ersten, zweiten und dritten Pipeline-Prozessoren (2-2, 2-4, 2-6) durch einen Befehls-Bus (I-INST) verbunden sind, über welchen jeder der Mehrzahl von Befehlen von dem ersten Speichermittel (2-200/221) zu dem zweiten Speichermittel (2-400) unter der Steuerung des ersten Steuerungs-Signals (I-BEGIN) gesendet wird, und daß zusätzlich jeder SpeicherBefehl (LDB, ADD, MUL) auch an das dritte Speichermittel (2-600) unter Steuerung des zweiten Steuerungs-Signals (I-EFIRST, I-ELAST) gesendet wird.

7. Vorrichtung gemäß Anspruch 1, dadurch gekennzeichnet, daß das Dekodiermittel (2-210) auf das dritte Steuerungs-Signal (A-DONE) reagiert zum Dekodieren eines nächsten der Vielzahl von Befehlen.

8. Vorrichtung gemäß Anspruch 6, dadurch gekennzeichnet, daß die ersten, zweiten und dritten Pipeline-Prozessoren (2-2, 2-4, 2-6) verbunden sind unter Steuerung eines Bereit-Logik-Mittels (2-222), welches auf das dritte Steuerungs-Signal (A-DONE) und eine Mehrzahl von Befehlssignalen von dem Dekodiermittel (2-210) und das erste Speichermittel (2-220/221) zum Erzeugen der ersten und zweiten Steuerungs-Signale (I-BEGIN; I-EFIRST) reagiert.

9. Vorrichtung gemäß Anspruch 1, gekennzeichnet durch eine Adress-Übersetzungseinheit (4), gekoppelt mit dem zweiten Adress-Erzeugungsmittel (2-412, 2-416) und mit einem Operanden-Cache (6-4) des Speichermittels, zum Übersetzen virtueller Adress-Signale in physische Adress-Signale zum Abrufen der für die Speicherbefehls-Ausführung benötigter Operanden von dem Operanden-Cache (6-4) und für ihre Speicherung in einem Daten-First-in-/First-Out-Register (2-630) des dritten Pipeline-Prozessors (2-6).

10. Verfahren zum Ausführen von Befehlen in einer Datenverarbeitungsvorrichtung in einer seriellen Pipeline-Weise, wobei die Befehle von mindestens ersten (SOL) und zweiten (LDB, ADD, MUL) Typen sind, wobei die Vorrichtung mindestens drei Pipeline-Prozessoren (2-2, 2-4, 2-6), verbunden miteinander in einer Produktionslinie, aufweist, zum Ausführen von zumindest Teilen von Befehlen in sequentieller Reihenfolge, wobei jeder der Pipeline-Prozessoren eine unterschiedliche Operation auf jedem der Befehle durchführt,
worin

- die Befehle durch den ersten Pipeline-Prozessor (2-2) dekodiert werden

**dadurch gekennzeichnet**, daß

- der erste Pipeline-Prozessor (2-2) den Befehlstyp durch Steuerungs-Signale (I-BEGIN; I-EFIRST, I-ELAST) identifiziert und spezifiziert, welcher der sequentiell gekoppelten Pipeline-Prozessoren im Verarbeiten und Ausführen dieser unterschiedlichen Typen von Befehlen einbezogen werden wird;
- der erste Befehlstyp (SOL) steuerbar von dem ersten Pipeline-Prozessor (2-2) zu dem zweiten Pipeline-Prozessor (2-4) übertragen wird für die Ausführung von Adresserzeugungs-Operationen, welche keine zusätzlichen Daten vom Speicher fordern; und
- der zweite Befehlstyp (LDB, ADD, MUL) steuerbar von dem ersten Pipeline-Prozessor (2-2) an sowohl den zweiten Pipeline-Prozessor (2-4) für eine erste teilweise Ausführung, welche Adresserzeugungs-Operationen einbezieht, als auch zu dem dritten Pipeline-prozessor (2-6) übertragen wird für eine zweite teilweise Ausführung, wobei die zweite teilweise Ausführung durch den dritten Pipeline-Prozessor (2-6) der ersten teilweisen Ausführung durch den zweiten Pipeline-Prozessor (2-4) folgt und wobei die zweite teilweise Ausführung durch den dritten Pipeline-Prozessor (2-6) die Ausführung einer Funktion umfaßt, welche durch den Befehl des zweiten Typs aufgerufen wird auf einem von einer Stelle in einem Speichermittel (6-4) gelesenen Operanden, dessen Adresse durch die erste teilweise Ausführung durch den zweiten Pipeline-Prozessor (2-4) entwickelt wurde.

11. Verfahren gemäß Anspruch 10, bei welchem der Befehl vom ersten Typ ein Register-zu-Register-Befehl (SOL) ist, welcher Schiebe-Operationen einbezieht.

12. Verfahren gemäß Anspruch 10, bei welchem der Befehl vom zweiten Typ ein Speicherbefehl (LDB, ADD, MUL) ist, welcher logisch/arithmetische Operationen einbezieht, welche die Zuführung von Operanden vom Speicher (6-4) erfordern.

13. Verfahren gemäß Anspruch 10, gekennzeichnet durch Befehle eines dritten Typs (BR), welche durch die ersten und zweiten Pipeline-Prozessoren (2-2, 2-4) verarbeitet werden und durch den ersten Pipeline-Prozessor (2-2) ausgeführt werden, um das Verzweigen zu einem anderen Befehlsstrom zu bewirken.

14. Verfahren gemäß Anspruch 13, bei welchem der Befehl vom dritten Typ ein unbedingter Verzweigungsbefehl ist.

**Revendications**

1. Dispositif (2) pour exécuter des instructions dans un système de traitement de données dans un mode de pipeline, ayant une pluralité de processeurs en pipeline (2-2, 2-4, 2-6) connectés en série, disposés pour former une ligne de production, et ayant des moyens de mémoire pour mémoriser des instructions (6-2) et des opérandes (6-4), dans lequel lesdites instructions qui sont de types différents sont fournies en succession à partir de la mémoire d'instructions (6-2) audit dispositif (2) pour être exécutées;
   lesdits processeurs en pipeline (2-2, 2-4, 2-6) qui sont couplés ensemble et connectés auxdits moyens de mémoire sont fournis pour exécuter des parties d'instructions dans un ordre séquentiel dans lequel chaque processeur en pipeline exécute une fonction différente sur chacune de ladite pluralité d'instructions qui sont appliquées à ladite ligne de production, comprenant :

   - un premier processeur en pipeline (2-2) pour le décodage d'instructions et l'exécution d'opérations de branchement, comprenant :

     - des premiers moyens de mémoire (2-220/221) pour mémoriser chacune de ladite pluralité d'instructions extraites depuis la mémoire d'instructions (6-2);
     - des moyens de décodage (2-210) couplés auxdits premiers moyens de mémoire;
     - des premiers moyens d'exécution (2-200, 2-202, 2-204, 2-206) couplés auxdits premiers moyens de mémoire et auxdits moyens de décodage pour exécuter des opérations de branchement de manière à enlever la dite instruction de branchement (BR) de la ligne de production;

   et caractérisé par le fait que lesdits moyens de décodage spécifient différents types d'instructions (BR, SOL, LDB, ADD, MUL) par des premiers et deuxièmes signaux de commande (I-BEGIN; I-EFIRST, I-ELAST) et par :

- un deuxième processeur en pipeline (2-4) pour la génération d'adresses et l'exécution d'opérations de décalage, comprenant :

  - des deuxièmes moyens de mémoire (2-400) pour mémoriser les dits différents types d'instructions, le chargement des dites instructions étant validé par le premier signal de commande (I-BEGIN);
  - des premiers moyens de génération d'adresse (2-401, 2-416, 2-417) couplés auxdits deuxièmes moyens de mémoire et auxdits premiers moyens d'exécution pour générer une première adresse en réponse à une instruction de branchement (BR), ladite première adresse spécifiant un emplacement d'instructions dans ladite mémoire d'instructions (6-2) qui doivent être branchées et extraites ensuite pour être exécutées;
  - des deuxièmes moyens de génération d'adresse (2-412, 2-416) couplés auxdits deuxièmes moyens de mémoire et à la mémoire d'opérandes (6-4) pour générer une deuxième adresse en réponse à une instruction de mémoire (LDB, ADD, MUL), ladite deuxième adresse spécifiant un emplacement d'opérandes dans ladite mémoire d'opérandes (6-4) qui sont exigés pour exécuter la dite instruction de mémoire;
  - des deuxièmes moyens d'exécution (2-412, 2-414) couplés auxdits deuxièmes moyens de mémoire et auxdits moyens de décodage pour exécuter des opérations de décalage, ayant des moyens de génération de signal de commande (2-406) pour générer un troisième signal de commande (A-DONE) pour indiquer auxdits moyens de décodage (2-210) quand ledit deuxième processeur en pipeline (2-4) a achevé l'opération sur l'instruction mémorisée dans lesdits deuxièmes moyens de mémoire (2-400) ou quand il a achevé sa part de l'exécution d'une instruction de mémoire, de manière à enlever toute instruction de registre à registre (SOL) de la dite ligne de production;

- un troisième processeur en pipeline (2-6) pour l'extraction d'opérandes et l'exécution d'opérations logiques/ arithmétiques, comprenant :

  - des troisièmes moyens de mémoire (2-600, 2-630) pour mémoriser les opérandes extraits depuis la mémoire d'opérandes (6-4) et pour mémoriser des instructions de mémoire (LDB, ADD, MUL), le chargement des dites instructions de mémoire étant validé par le deuxième signal de commande (I-EFIRST, I-ELAST); et
  - des troisièmes moyens d'exécution (2-608, 2-616, 2-618, 2-622) couplés auxdits troisièmes moyens de mémoire et à la mémoire d'opérandes (6-4) pour exécuter l'achèvement d'opérations logiques/ arithmétiques de manière à enlever l'instruction de mémoire en rapport de la dite ligne de production.

2. Dispositif selon la revendication 1, caractérisé en ce que ledit premier processeur en pipeline (2-2) comprend des moyens d'extraction (2-204/206) pour extraire ladite chacune de ladite pluralité d'instructions depuis une mémoire cache d'instructions (6-2) desdits moyens de mémoire en réponse à une séquence de signaux d'adresse fournis par un premier compteur d'instructions (2-200) compris dans lesdits premiers moyens d'exécution et pour mémoriser lesdites instructions dans lesdits premiers moyens de mémoire (2-220/221).

3. Dispositif selon la revendication 1, caractérisé en ce que lesdits premiers moyens d'exécution comprennent un premier compteur d'instructions (2-200) pour mémoriser des adresses d'emplacements dans ladite mémoire d'instructions (6-2) de ladite chacune de ladite pluralité d'instructions, et en ce qu'au cours de l'exécution d'une instruction de branchement (BR) la dite première adresse est fournie à partir d'un deuxième compteur d'instructions (2-416), qui fait partie desdits premiers moyens de génération d'adresse, au dit premier compteur d'instructions (2-200) et est mémorisée dedans.

4. Dispositif selon la revendication 3, caractérisé en ce que les premiers moyens de génération d'adresse et les deuxièmes moyens de génération d'adresse ont le dit deuxième compteur d'instructions (2-416) en commun et en ce que le dit premier compteur d'instructions (2-200) et le dit deuxième compteur d'instructions (2-416) mémorisent tous deux l'adresse de l'instruction suivante.

5. Dispositif selon la revendication 2, caractérisé en ce que les adresses mémorisées dans ledit premier compteur d'instructions (2-200) identifient des emplacements dans la mémoire cache d'instructions (6-2) desdits moyens de mémoire et en ce que lesdits premiers moyens de mémoire (2-220/221) mémorisent les instructions reçues depuis ladite mémoire cache d'instructions (6-2).

6. Dispositif selon la revendication 1, caractérisé en ce que lesdits premier, deuxième et troisième processeurs en pipeline (2-2, 2-4, 2-6) sont connectés par un bus d'instructions (I-INST) sur lequel chacune de ladite pluralité d'instructions est transmise à partir des dits premiers moyens de mémoire (2-220/221) aux dits deuxièmes moyens de mémoire (2-400) sous la commande du dit premier signal de commande (I-BEGIN) et en ce que, de plus, chaque instruction de mémoire (LDB, ADD, MUL) est transmise aussi aux dits troisièmes moyens de mémoire (2-600) sous la commande du dit deuxième signal de commande (I-EFIRST, I-ELAST).

7. Dispositif selon la revendication 1, caractérisé en ce que lesdits moyens de décodage (2-210) sont sensibles au dit troisième signal de commande (A-DONE) pour décoder une instruction suivante de ladite pluralité d'instructions.

8. Dispositif selon la revendication 6, caractérisé en ce que lesdits premier, deuxième et troisième processeurs en pipeline (2-2, 2-4, 2-6) sont connectés sous la commande de moyens logiques de disponibilité (2-222) sensibles au dit troisième signal de commande (A-DONE) et à une pluralité de signaux d'instruction provenant desdits moyens de décodage (2-210) et desdits premiers moyens de mémoire (2-220/221) pour générer lesdits premier et deuxième signaux de commande (I-BEGIN; I-EFIRST).

9. Dispositif selon la revendication 1, caractérisé par une unité de traduction d'adresse (4) couplée auxdits deuxièmes moyens de génération d'adresse (2-412, 2-416) et à une mémoire cache d'opérandes (6-4) desdits moyens de mémoire pour traduire des signaux d'adresse virtuelle en des signaux d'adresse physique pour extraire les opérandes exigés pour l'exécution d'instructions de mémoire depuis ladite mémoire cache d'opérandes (6-4) et pour leur mémorisation dans un registre de données premier entré/premier sorti (2-630) du troisième processeur en pipeline (2-6).

10. Méthode d'exécution d'instructions dans un dispositif de traitement de données d'une manière sérielle en pipeline dans laquelle lesdites instructions sont au moins d'un premier (SOL) et d'un deuxième (LDB, ADD, MUL) types, ledit dispositif comprenant au moins trois processeurs en pipeline (2-2, 2-4, 2-6) couplés ensemble dans une ligne de production pour exécuter au moins des parties d'instructions dans un ordre séquentiel où chacun desdits processeurs en pipeline effectue une opération différente sur chacune desdites instructions,
       dans laquelle :

   - lesdites instructions sont décodées par ledit premier processeur en pipeline (2-2),

       et caractérisée en ce que :

   - ledit premier processeur en pipeline (2-2) identifie le type d'instruction par des signaux de commande (I-BEGIN; I-EFIRST, I-ELAST) et spécifie lesquels des processeurs en pipeline couplés séquentiellement seront impliqués dans le traitement et l'exécution de ces différents types d'instructions;
   - ledit premier type d'instruction (SOL) est transmis de façon contrôlée à partir dudit premier processeur en pipeline (2-2) audit deuxième processeur en pipeline (2-4) pour l'exécution d'opérations de génération d'adresse n'exigeant pas de données supplémentaires depuis la mémoire; et
   - ledit deuxième type d'instruction (LDB, ADD, MUL) est transmis de façon contrôlée à partir dudit premier processeur en pipeline (2-2) à la fois au deuxième processeur en pipeline (2-4) pour une première exécution en partie impliquant des opérations de génération d'adresse et au troisième processeur en pipeline (2-6) pour une deuxième exécution en partie, ladite deuxième exécution en partie par ledit troisième processeur en pipeline (2-6) suivant ladite première exécution en partie par ledit deuxième processeur en pipeline (2-4), et ladite deuxième exécution en partie par ledit troisième processeur en pipeline (2-6) comprenant l'exécution d'une fonction appelée par ladite instruction du deuxième type sur un opérande lu depuis un emplacement dans des moyens de mémoire (6-4) dont l'adresse a été développée par ladite première exécution en partie par ledit deuxième processeur en pipeline (2-4).

11. Méthode selon la revendication 10, dans laquelle ladite instruction du premier type est une instruction de registre à registre (SLO) impliquant des opérations de décalage.

12. Méthode selon la revendication 10, dans laquelle ladite instruction du deuxième type est une instruction de mémoire (LDB, ADD, MUL) impliquant des opérations logiques/arithmétiques exigeant la fourniture d'opérandes depuis la mémoire (6-4).

13. Méthode selon la revendication 10, caractérisée par des instructions d'un troisième type (BR) qui sont traitées par les dits premier et deuxième processeurs en pipeline (2-2, 2-4) et exécutées par ledit premier processeur en pipeline (2-2) pour effectuer le branchement sur un autre flot d'instructions.

**14.** Méthode selon la revendication 13, dans laquelle ladite instruction du troisième type est une instruction de branchement inconditionnel.

DATA PROCESSING SYSTEM 1

## Fig. 1

I CACHE 6-2

| LOCATIONS (HEX) | 0          15 16          31 | LOCATIONS (HEX) |
|-----------------|:---:|:---:|-----------------|
| 1000 | LD B1 | 004F | 1001 |
| 1002 | LD B2 | 004F | 1003 |
| 1004 | SOL 3 R1 | B +5 | 1005 |
| 1006 | ADD R3 | 0010 | 1007 |
| 1008 | MUL R6 | 6731 | 1009 |
| 100A | LD R7 | XXXX | 100B |

## Fig. 4

EP 0 378 816 B1

*Fig. 3-1*

*Fig. 3-2*

Fig. 3-3

| | 1 | 2 | 3 | 4 | 5 | 6 | 7 |
|---|---|---|---|---|---|---|---|
| **I FETCH PORTION OF I UNIT** | LDB1 9CC0 004F_H<br>VAO 2-202 1000_H<br>ICACHE 6-2 9CC0 004F<br>STRING BUFFER A 2-220<br>9CC0 004F | LDB2 ACC0 004F_H<br>VAO 2-202 1002_H<br>ICACHE 6-2 ACC0 004F<br>STRING BUFFER A 2-220<br>ACC0 004F | SHIFT RI L3 1003_H<br>BR 0F85_H<br>VAO 2-202 1004_H<br>ICACHE 6-2 1003 0F85_H<br>STRING BUFFER A 2-220<br>1003 0F85_H | ADD R3 BA00 0010<br>VAO 2-202 1006_H<br>ICACHE 6-2 BA00 0010<br>STRING BUFFER A 2-220<br>BA00 0010 | MUL R6 EB70 6731<br>VAO 2-202 1006_H<br>ICACHE 6-2 EB70 6731<br>STRING BUFFER A 2-220<br>EB70 6731 | LDR7<br>ICACHE 6-2 (LDR7)<br>STRING BUFFER B 2-221 | |
| **I CRACK PORTION OF I UNIT** | | LDB1<br>RINSTR 2-400 9CC0 004F<br>OPCODE 2-402 1001 1 1001_B<br>I FIFO 2-600 9CC0 004F<br>RDR(A)2-406 F/W<br>I-BEGIN (A)<br>I-EFIRST (E)<br>I-ELAST (E) | LDB2<br>RINSTR 2-400 ACC0 004F<br>OPCODE 2-402 1010 1 1001<br>I FIFO 2-600 ACC0 004F<br>RDR(A)2-406 F/W<br>I-BEGIN (A)<br>I-EFIRST (E)<br>I-ELAST (E) | SOL<br>RINSTR 2-400 1003_H<br>RDR(A) 2-406 F/W<br>OPCODE 2-402 0001 0000<br>I-BEGIN (A) | BR<br>RINSTR 2-400 0F85_H<br>VAI 2-206 1005+5+100A_H<br>OPCODE 2-402 0000 1111 1<br>RDR(A)2-406 F/W | ADD R3 0010<br>(DUMMY CYCLE) | LDR7 |
| **A UNIT** | | | LDB1<br>RINSTR 2-400 4F_H<br>PROG CTR 2-416 1000_H<br>ALU 2-412(A+B+1) 1050_H<br>VIRTUAL ADDRESS | LDB2<br>RINSTR 2-400 4F_H<br>PROG CTR 2-416 1002_H<br>ALU 2-412(A+B+1) 1052_H<br>VIRTUAL ADDRESS | SOL<br>REGISTER RI OF REGISTER<br>FILE 2-404 12345678_H<br>SHIFTER 2-414<br>REGISTER RI 91A2B3C0_H | BR<br>P CTR 2-200<br>PROG CTR 2-416<br>A-P-LD (I)<br>A-BRANCH (I) | |
| **VMMU UNIT** | | | | LDB1<br>VMMU 4<br>PHYSICAL ADDRESS<br>201050_H | LDB2<br>VMMU 4<br>PHYSICAL ADDRESS<br>201052_H | | |
| **E CACHE UNIT** | | | | | LDB1<br>E CACHE 6-4 TO<br>DATA FIFO 2-630<br>OPERAND 12345678_H | LDB2<br>E CACHE 6-4 TO<br>DATA FIFO 2-630<br>OPERAND 24681357_H | |
| **E UNIT** | | | | | | LDB1<br>STORE OPERAND IN<br>REGISTER B1 OF<br>REGISTER FILE 2-610<br>VIA SIGN EXTENDER 2-614<br>ALU 2-608 & RESULT MUX<br>2-622 | LDB2<br>STORE OPERAND IN<br>REGISTER B2 OF<br>REGISTER FILE 2-610 |

*Fig. 5*

EP 0 378 816 B1

A UNIT 2-4 OPERATION OF THE
LOAD BI (LDBI) INSTRUCTION   9CCO 004F$_H$  (P+D)

RDR(A)2-406    16(0)    2-450

**RB-OPW**
SELECT   CONTENTS   OF
RINSTR  2-400 (9CCO  004F)$_H$

19-20  (00)    2-452

**INDEX 0**
INDEX  SHIFTER  2-410
SELECTS   0000  004F$_H$
FROM  RINSTR  2-400

29-31  (000)    2-454

**AUB-RB  16·31**
APPLY  0000  004F   TO
B SIDE  OF  ALU  2-412

26-28   (000)    2-456

**AUA-P**
APPLY  CONTENTS   OF
PROGRAM  CTR  (P)  2-416
TO  A SIDE  OF  ALU  2-412

34-37(I)$_H$    2-458

**AU-A+B+I**
ADD  P(1000)$_H$+  DISP (4F)$_H$+I
= 1050$_H$  (VIRTUAL  ADDRESS)

41-42  (3)$_H$    2-460

**VALU P**
ASSEMBLE   VIRTUAL
ADDRESS   1050$_H$

32-33 (00)    2-462

**OFFSET**
INDICATES  WORD  AND  BYTE
OFFSET  FROM  MEMORY  WORD
BOUNDARY
E-OFF (0) (DW AT WORD BOUNDARY)

43(I)    2-464

**QLD**
LOAD  VIRTUAL ADDRESS
INTO  Q REG  2-418

54-63(100)$_H$    2-466

**VI-I**
OFFSET VALID TRANSFER
VIRTUAL ADDRESS 1050$_H$
TO VMMU 4

44-45 (10)    2-468

**PP2**
INCREMENT PROGRAM
CTR 2-416 BY 2

53(I)    2-470

**A-DONE**
SEND A-DONE SIGNAL
TO I UNIT 2-2

*Fig. 6A*

E UNIT 2-6 OPERATION OF THE
LOAD 81 (LD81) INSTRUCTION 9CC0 004F$_H$ (P+0)

RDR(E)2-606 45-46 (01) ⌐2-650    47.(I)    ⌐2-652    71-77(03)$_H$    ⌐2-654

**DW**
DATA ALIGNED IN D-FIFO 2-630 FOR DOUBLE WORD OPERAND NO OFFSET(E-OFF=0)

**AUA DAT**
OPERAND FROM D-FIFO 2-630 TO A PORT OF ALU 2-608

**RNG-REF**
REF-FIFO 2-632 APPENDS RING NUMBER (0,1) TO BITS 2-31 OF OPERAND

22-27 (3F)$_H$    ⌐2-656      88-89 (01)    ⌐2-658

**AU-A**
ALU 2-608 PROCESSES OPERAND

**ALU-DW**
ALU 2-608 CONFIGURED FOR DOUBLE WORD

66-67 (01)      ⌐2-660

**RSLT-PTR**
RESULT MUX 2-622 SELECTS BITS 0,1 FROM REF-FIFO 2-632 AND BITS 2-31 FROM ALU 2-608

31-37(1,001,001)$_B$    ⌐2-662      79-82 (01)$_H$    ⌐2-664

**A-BX**
GENERATE REGISTER FILE 2-610 A ADDRESS (09)$_H$ FROM MICRO 001 AND INSTRUCTION (I-3) 001$_B$ (09$_H$ LOCATION OF REG 81)

**RFW(A)**
WRITE DOUBLE WORD OPERAND TO 81 OF REGISTER FILE (A) 2-610

63(1)    ⌐2-666      29,1-3 (04)    ⌐2-668

**E-DONE**
SEND E-DONE SIGNAL TO I UNIT 2-2

**NBFMT**
**NBR**
BRANCH TO NEXT E-UNIT CONTROL STORE 2-604 RDR(E) 2-206 4,5,18,19(2)$_H$

## Fig. 6B

A UNIT 2-4 OPERATION OF THE
SHIFT R1 LEFT 3 (SOL) INSTRUCTION 1003$_H$

RDR(A)2-406  6-11 (04)$_H$        ⌐2-480

**B-0X**
GENERATE RFB ADDRESS 01$_H$ OF
REGISTER R1 OF REGISTER
FILE 2-404 (000:OPCODE(1-3))

27-29 (0)$_H$        ⌐2-482

**SIN 2-RB**
READ OUT CONTENTS OF R1
(12345678)$_H$ TO SHIFTER 2-414

30-31 (3)        ⌐2-484

**SIN 3-0**
LOAD 0000 0000$_H$ INTO THE 32
LOW ORDER POSITIONS OF
SHIFTER  2-414

16 (0)        ⌐2-486

**SHIF-L**
SET SHIFTER 2-414 FOR LEFT
SHIFT OPERATION

17-19 (2)        ⌐2-488

**SHSI**
SET UP SHIFTER 2-414 TO SHIFT
3 AS SPECIFIED BY OPCODE(12-15)

12-13 (10)        ⌐2-490

**RF:B-SHFT**
SHIFT LEFT 3 STORE(91A2B3C0)$_H$
BACK IN R1 OF REGISTER FILE
2-404

46-51 (38)        ⌐2-492

**I-C-SHFT**
SET INDICATOR C FOR SHIFT ORDER

53 (1)        ⌐2-494

**A-DONE**
SEND A-DONE SIGNAL TO I UNIT
2-2

44-45 (01)        ⌐2-496

**PP1**
INCREMENT PROGRAM COUNTER
BY ONE

FIG. 7